Europäisches Patentamt

European Patent Office

Office européen des brevets

(11) Publication number: **0 195 528**
**A1**

## (12) EUROPEAN PATENT APPLICATION

(21) Application number: **86301242.3**

(22) Date of filing: **21.02.86**

(51) Int. Cl.⁴: **F 16 L 43/00**
**B 65 G 53/52**

(30) Priority: **20.03.85 JP 54381/85**

(43) Date of publication of application:
**24.09.86 Bulletin 86/39**

(84) Designated Contracting States:
**CH DE FR GB LI**

(71) Applicant: **Horii, Kiyoshi**
**No. 8-15-501 Kamimeguro 5-Chome Meguro-ku**
**Tokyo(JP)**

(71) Applicant: **AKATAKE ENGINEERING CO, LTD**
**14 Nishishiiji**
**Numazu-shi Shizuoka-ken(JP)**

(72) Inventor: **Horii, Kiyoshi**
**8-15-501 Kamimeguro, 5-chome**
**Meguro-ku Tokyo(JP)**

(72) Inventor: **Akimoto, Hiroshi**
**A-506 Ken-Ei Haradanchi 978 Otsuka**
**Numazu-shi Shizuoka-ken(JP)**

(74) Representative: **Jones, Colin et al,**
**W.P. THOMPSON & CO. Coopers Building Church Street**
**Liverpool L1 3AB(GB)**

(54) Pipe elbow.

(57) A pipe bend for conveying a powder comprises a divergent inlet section (4), a uniform bent section (6) extending from the inlet section (4) and a convergent outlet section (8) extending from the bent section (6). The bent section (6) defines a curved flow passage (22) having a circular cross-sectional shape and including a curved part. The inlet section (4) defines a diverging inlet passage (10) having a circular cross-sectional shape. The cross-sectional area of the divergent part increases progressively towards the downstream side in the conveying direction (12) of the powder.

Fig. 1

EP 0 195 528 A1

1.

## DESCRIPTION.

## "PIPE ELBOW"

This invention relates to a pipe bend or pipe elbow and more specifically, to a pipe bend or elbow suitable for conveying a powder on a stream of air.

In recent years, a technique of pneumatic conveyance has come into acceptance in conveying a powder, such as powered coal. According to this technique, a straight pipe and a pipe bend can be properly connected, and the powder is conveyed afloat on a stream of a gas, normally air, which is passed through these pipes.

This pneumatic conveyance technique, however, has the disadvantage that the powder causes heavy abrasion to the bent section of the pipe bend and will result in damage to the pipe bend within a short period of time. Specifically, at the bent section of the pipe bend, the gas flows along in according to its intended path. However, the powder carried on a stream of of the gas cannot exactly follow the curvilinear motion of the gas (namely, does not flow along the bent section) but flows rectilinearly and collides against the outer wall portion of the bent section. The collision of the powder results in heavy abrasion at the outer wall portion of the bent section, and as the abrasion increases, the pipe bend will be damaged.

In an attempt to overcome this disadvantage, an improved pipe bend or pipe elbow was provided in which the thickness of the outer wall portion of the bent section is made larger than its inner wall portion. Because of the larger outer wall thickness of the bent section, this improved pipe bend is serviceable for a somewhat longer period of time before it is damaged beyond use. However, it does not offer a fundamental solution to the problem of abrasion caused by the collision of powder described above.

2.

It is an object of this invention to provide an excellent pipe bend which fundamentally solves the problem of abrasion by the powder, and can be used over an extended period of time.

According to this invention, a pipe bend for conveying a powder comprises an inlet section, a bent section extending from the inlet section and an outlet section extending from the bent section; wherein the bent section defines a curved flow passage having a substantially circular cross-sectional shape and including a curved part, and the inlet section defines an inlet flow passage having a substantially circular cross-sectional shape, and is characterised in that the inlet flow passage includes a divergent part having a cross-sectional area progressively increasing towards the downstream side in the conveying direction of the powder.

The inventors, of the present invention, after extensive investigations and experiments, have found that abrasion occurring in the outer wall portion of the bent section can be drastically reduced by forming both a curved flow passage in the bent section of the pipe bend or pipe elbow and an inlet flow passage of its inlet section in a substantially circular cross-sectional shape, and progressively increasing the cross-sectional area of at least a part of the inlet flow passage towards the downstream side in the conveying direction of the powder.

The invention is further described by way of example, with reference to the accompanying drawings, in which:-

Fig. 1 is a sectional view showing one embodiment of pipe bend constructed in accordance with this invention; and

Fig. 2 is a sectional view taken along line II-II of Figure 1.

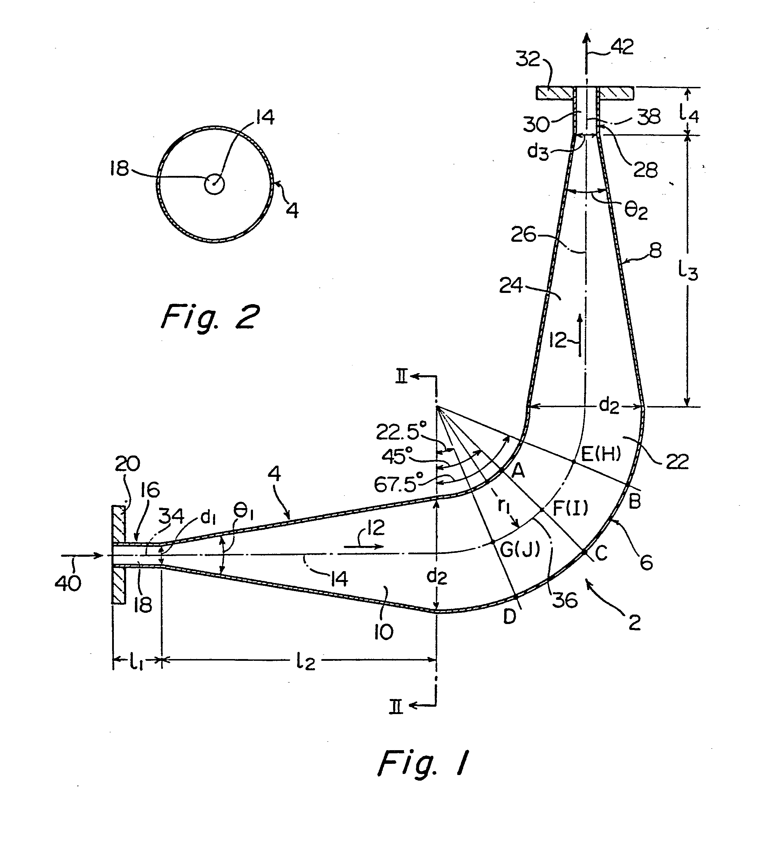

With reference to Fig. 1, the pipe bend or pipe elbow shown at 2 has an inlet section 4, a bent section 6 extending from the inlet section 4, and an outlet section 8 extending from the bent section 6. With reference to Fig. 2 also, the inlet section 4 illustrated is nearly conical and its inner circumferential surface defines an inlet flow passage having a nearly circular, preferably substantially circular (as shown in the drawing), cross-sectional surface. It is important that at least a part of the inlet passage should be divergent and have a cross-sectional area which progressively increases towards the downstream side in the conveying direction shown by an arrow 12. In the specific embodiment, the cross-sectional area of the divergent part gradually increases from its one end (the upstream end in the conveying direction) to its other end (the downstream end in the conveying direction) in the conveying direction shown by arrow 12. As shown in Fig. 1, the cross section of the inlet passage diverges concentrically at a predetermined angle towards the downstream side in the conveying direction shown by arrow 12 with its axis 14 as a centre (the angle $\theta_1$ of divergence of the inlet passage 10 will be described hereinafter).

An inlet-side joint portion 16 is provided at the upstream end of the inlet section 4 in the conveying direction shown by arrow 12, and defines a feed opening 18 having at least a nearly circular, preferably substantially circular (as shown in the specific embodiment), cross-sectional shape. The cross-sectional area of the feed opening 18 is substantially uniform along its entire length. An annular flange 20 is secured to the peripheral surface of the upstream end of the joint portion 16. The flange 20 is adapted to be connected to a flange (not shown) provided, for example, in a straight pipe to be connected to the upstream side of the pipe bend 2 in the conveying direction shown by arrow 12.

4.

Again with reference to Fig. 1, the bent section 6 is arcuate, and its inner circumferential surface defines a curved flow passage 22 having at least a nearly circular, preferably substantially circular (as in the specific embodiment), cross-sectional shape. In the specific embodiment illustrated, the curved flow passage 22 is formed of a bent part curved in an arcuate shape substantially by 90 degrees from its one end (the upstream end in the conveying direction) to its other end (downstream end in the conveying direction), and its cross-sectional area is substantially uniform along its entire length.

The illustrated outlet section 8 is at least nearly conical, and its inner circumferential surface defines an outlet passage 24 whose cross-sectional shape is nearly circular, preferably substantially circular as shown in the illustrated embodiment. Desirably, at least a part of the outlet passage 24 is convergent and its cross-sectional area progressively decreases towards the downstream side in the conveying direction shown by arrow 12. In the illustrated embodiment, the cross-sectional area of the convergent part is gradually decreased from its one end (the upstream end in the conveying direction) to its other end (the downstream end in the conveying direction) towards the downstream side in the conveying direction shown by arrow 12. Furthermore, in the illustrated embodiment, the cross section of the outlet passage 24 converges concentrically at a predetermined angle towards the downstream side in the conveying direction shown by arrow 12 about its axis 26 as a centre (the angle $\theta_2$ of conveyance of outlet passage 24 will be described hereinafter).

An outlet-side joint portion 28 is provided at the downstream end of the outlet section 8 in the conveying direction shown by arrow 12. The outlet side joint portion 28 defines a discharge opening 30 whose
cross-sectional shape is at least nearly circular,
preferably substantially circular as in the illustrated
embodiment, and the cross-sectional area of the discharge
opening 30 is substantially uniform along its entire
length. An annular flange 32 is secured to the peripheral
surface of the downstream end of the joint portion 28.
The flange 32 is adapted to be connected to a flange
(not shown) provided for example, in a straight pipe
connected to the downstream side of the pipe bend 2 in
the conveying direction shown by arrow 12.

In the pipe bend 2 described above, the axis 34
of the feed opening 18, the axis 14 of the inlet passage
10, the axis 38 of the discharge opening 30 are
continuous from the inlet-side joint portion 16 to
the outlet-side joint portion 28. The axis 14 of the feed opening 18 and
the axis 14 of the inlet passage 10 extend rectilinearly in the conveying
direction shown by arrow 12. The axis 36 of the curved
flow passage 22 is curved in an arcuate shape substantially
at 90 degrees. The axis 26 of the outlet passage 24 and
the axis 38 of the discharge opening 30 extend rectilinearly in the conveying direction shown by arrow
12. (Accordingly, in the illustrated embodiment, the
conveying direction changes by substantially 90 degrees
by the action of the curved flow passage 22, and the
conveying direction in the outlet passage is substantially
perpendicular to the conveying direction in the inlet
passage 10).

The pipe bend 2 can be made up of a pipe formed
of, for example, carbon-streel for piping.

The operation and result of the pipe bend 2 having
the above-described structure will be described.

When a gas, such as air, containing a powdery
material, such as powdered coal or other powdered
abrasive material is fed from the feed opening 18 of the

6.

inlet-side joint portion 16 in the direction shown by an arrow 40 (in other words, the powder is carried on a stream of gas flowing in the direction of arrow 40, and fed in a fluidised condition), the flow speed of the gas decreases in the inlet passage 10. Since the cross-sectional area of the inlet passage 10 is progressively increased towards the downstream side in the conveying direction shown by arrow 12, the flow speed of the gas is gradually decreased. As a result, the flow speed of the powdered material being conveyed is gradually decreased without being substantially separated from the gas as a carrier. Consequently, the powdered material acts weakly on the inner circumferential surface and its vicinity of the bent section 6 nearly uniformly on the whole. Hence, it is possible to prevent the powder from colliding in a concentrated manner with the inner surface of the outer wall portion of the bent section as, in the prior art pipe bend, and therefore to avoid wear. The decrease of the flow speed of the powder is greatly affected by the angle $\theta_1$ of divergence of the inlet passage 10 (the angle formed by the inner surface of the inlet section 4 which defines one end of the inlet passage 10 and the inner surface of the inlet section 4 which defines the other end of the inlet passage 10 in a vertical section passing through the axis of the inlet passage 10). When the angle $\theta_1$ of divergence is excessively large, the gas and the powder separate from each other, and the powder forms a so-called jet stream which collides with the inner surface of the outer wall portion of the bent section 6. On the other hand, when the angle $\theta_1$ of divergence is zero ($\theta_1 = 0$), there is no variation in cross-sectional area, and therefore, the flow speed of the gas does not decrease. The powder, therefore, collides with the inner surface of the outer wall portion of the bent section 6 at a predetermined conveying speed. To decrease the flow speed of the powder without substantially separating it from the gas, it is preferred that the angle $\theta_1$ of divergence be generally larger than 0 degree but not exceeding 50 degrees $0° < \theta_1 \leq 50°$), preferably larger than 10 degrees but not exceeding 30 degrees ($10° < \theta_1 \leq 30°$), although this varies somewhat depending upon the conveying speed of the powder, the particle diameter of the powder, etc.

When the powder and the gas then flow into the outlet passage 24 via the curved flow passage 22, the flow speed of the gas increases in the outlet passage 24. Since the cross-sectional area of the outlet passage 24 is progressively decreased towards the downstream side in the conveying direction shown by arrow 12, the flow speed of the gas increases gradually and therefore the flow speed of the powder also increases gradually. Consequently, the gas and the powder smoothly assume substantially the same state as they did when supplied to the feed opening 18, and are discharged from the discharge opening 30 in the direction of an arrow 42. Accordingly, the gas and the powder can be further conveyed in the original state. Such a reviving of the state of the flows of the gas and the powder is greatly affected by the angle $\theta_2$ of convergence of the outlet passage 24 (the angle formed by the inner surface of the outlet section 8 which defines one end of the outlet passage 24 and the inner surface of the outlet section 8 which defines the other end of the outlet passage 24 in a vertical section passing through the axis 26 of the outlet passage 24). It is preferred that as shown in Fig. 1, the angle $\theta_2$ of convergence be made substantially equal to the angle $\theta_1$ of divergence ($\theta_1 = \theta_2$), or in other words, the shape of the divergent part of the inlet passage 10 be made symmetrical with that of the convergent

8.

part of the outlet passage 24 with respect to the curved flow passage 22.

While one specific example of pipe bend or pipe‑elbow constructed in accordance with this invention has been described with reference to the case of using a gas, such as air, the invention is not limited to this embodiment. For example, the pipe bend or pipe elbow of this invention can also be applied to the conveyance of a powder using a liquid, such as water, as a conveying carrier.

Furthermore, to increase the abrasion resistance of pipe bend, a desired part (especially the inner circumferential surface of the bent section) may be lined with a material having excellent abrasion resistance, such as ceramics.

Example of the invention.

An experiment was conducted for the conveying of a powder using a pipe bend composed of carbon steel for piping and having the structure shown in Fig. 1, and the worn states of various parts of the bent section of the pipe bend were measured. The pipe bend used had the following dimensional specification.

Diameter $d_1$ of the feed opening: 21.6 mm

Length $\ell_1$ of the feed opening: 50 mm

Length $\ell_2$ of the inlet passage: 275 mm

Angle $\theta_1$ of divergence of the inlet passage: 19°

Diameter $d_2$ of the curved flow passage: 105.3 mm

Radius $r_1$ of curvature of the axis of the curved flow passage: 152.4 mm

Length $\ell_3$ of the outlet passage: 275 mm

Angle $\theta_2$ of convergence of outlet passage: 19°

Diameter $d_3$ of the discharge opening; 21.6 mm

Length $\ell_4$ of the discharge opening; 50 mm Air was used as a conveying carrier, and a powdered abrasive material composed of alumina was conveyed on a stream of air. The abrasive material was Morandum A43 (a trade name of a product sold by Showa Denko Kabushiki Kaisha), and has a size of U.S. mesh No. 150. Air was fed at a rate of 36 $Nm^3/h$, while Morandum was fed at a rate of 60 kg/h (the weight ratio of air to Morandum was therefore 1:1.3). The flow speed of the air stream at the feed opening was 27.3 metres/ sec.

The worn states of the bent section of the pipe bend were measured at the following parts.

Parts A, C, F and I

The inner wall portion, outer wall portion and both side wall portions, respectively, (F was located rearwardly in a direction perpendicularly to the sheet surface in Fig. 1, and I, forwardly in the direction perpendicular to the sheet surface) in a cross section taken at 45° from the one end of the curved flow passage of the bent section.

Parts B, E and H

The outer wall portion and both side wall portions, respectively, (E was located rearwardly in a direction perpendicular to the sheet surface in Fig. 1, and H, forwardly in the direction perpendicular to the sheet surface) in a cross section taken at 67.5° from one end of the curved flow passage of the bent section.

Parts D, G and J

The outer wall portion and both side wall portions (G was located rearwardly in a direction perpendicular to the sheet surface in Fig. 1, and J, forwardly in the direction perpendicular to the sheet surface) in a cross section taken at 22.5° from one end of the curved flow passage of the bent section

Morandum was conveyed continuously for 212 hours under the aforesaid conditions, and then the worn states of the above parts in the bent section were examined. The results are shown in Table 1.

Table 1 indicates thickness of the above mentioned parts of the bent section before the start of the experiment and after the experiment. The thicknesses were measured by using an ultrasonic thickness gauge

10.

(errors of accuracy 0.1 mm; Type DM2 made by Krautkramer GmbH, West Germany). It is seen from Table 1 that hardly any wear was observed at the above parts of the bent section, particularly the outer wall portion (C) which undergoes heavy wear by the powder in the prior art pipe bend.

TABLE 1

| Measured Part | Thickness before the experiment (mm) | Thickness after the experiment (mm) | Thickness after the experiment in Comparative Example 1 |
|---|---|---|---|
| A | 4.6 | 4.6 | 4.6 |
| B | 4.0 | 3.8 | 3.6 |
| C | 3.9 | 3.8 | 0 (holes formed) |
| D | 3.9 | 3.6 | 3.8 |
| E | 4.2 | 4.1 | 4.2 |
| F | 4.2 | 4.1 | 4.2 |
| G | 4.3 | 4.2 | 4.2 |
| H | 4.4 | 4.4 | 4.3 |
| I | 4.3 | 4.3 | 4.2 |
| J | 4.4 | 4.4 | 4.4 |

Comparative Example 1

For comparison, an experiment of conveying Morandum was carried out in the same way as in the Example of the invention by using a pipe bend having the same structure as the pipe bend used in the Example of the invention except that the inlet passage and the outlet passage were not progressively increased and decreased in cross-sectional area, respectively (the diameter of the inlet passage was substantially equal to the diameter of the feed opening, and the diameter of the outlet passage was substantially equal to the diameter of the discharge opening; namely, at one end of the curved flow passage the diameter of the flow passage increased abruptly to 105.3 mm from 21.6 mm, and at the other end of the curved flow passage the diameter of the flow passage decreased abruptly to 21.6 mm from 105.3 mm).

Since the pipe bend was damaged after a lapse of 144 hours from the start of the experiment, the experiment was terminated at this point, and the worn states of the same various parts as in the bent section in the Example of the invention were examined. The results are shown in Table 1. Table 1 indicates the thicknesses of these parts before the experiment (since the structure of the bent section in Comparative Example 1 is the same as in the Example of the invention, the thicknesses of its various parts are equal to these values before start of the experiment in Comparative Example 1) and the thicknesses of the various parts of the bent section after the damage of the pipe band (after 144 hours from the start of the experiment).

In Comparative Example 1, the flow rate of air was abruptly decreased in the curved flow passage, but the Morandum separated from the air and collided as a so-called jet stream against the outer wall portion of the bent section. Consequently, the outer wall portion was heavily worn, and finally broken at part C.

The inventors of the present invention have the following theoretical observations on the reason why the abrasion is much less in the Example of the invention than in Comparative Example 1. Generally, when a gas flows in a predetermined flow passage, any change in the flow passage (such as strain of the pipe, a convergent part, etc) converts this gas into a swirling flow. When a powder, such as Morandum, is carried and conveyed on the swirling gas flow, diverging spiral vortices will form in the inlet passage of the pipe bend (that part of the inlet passage of which cross-sectional area is gradually increased towards the downstream side in the conveying direction). The free vortices disperse the individual particles of the powder, and the particles collide with widely separated parts of the inner circumferential surface of the bent section. Also, the vortices decrease the flow speed of the individual particles of the powder and act to reduce the energy of collision with the inner circumferential surface of the bent section. As a result, the amount of abrasion of the bent section was drastically reduced in the Example of the invention.

Comparative Example 2

For comparison, the same experiment as in the Example of the invention was conducted using an ordinary pipe bend made of carbon steel for piping. The sizes of the various parts of the pipe bend used in Comparative Example 2 were as follows:-

Diameter $d_1$ of the inlet passage, diameter $d_2$ of the curved flow passage and diameter $d_3$ of the outlet passage: 21.6 mm

Radius $r_1$ of curvature of the axis of the curved flow passage: 200 mm

Thickness $t$ of the bent section: 2.8 mm

In this experiment, the pipe bend broke after a lapse of 37.75 hours from the start of the experiment.

CLAIMS

1. A pipe bend for conveying a powder comprising an inlet section (4), a bent section (6) extending from the inlet section (4) and an outlet section (8) extending from the bent section (6); wherein the bent section (6) defines a curved flow passage (22) having a substantially circular cross-sectional shape and including a curved part, and the inlet section (4) defines an inlet flow passage (10) having a substantially circular cross-sectional shaped, characterised in that the inlet flow passage (10) includes a divergent part having a cross-sectional area progressively increasing towards the downstream side in the conveying direction (12) of the powder.

2. A pipe bend according to claim 1, wherein the cross-sectional area of the curved flow passage (22) is substantially uniform along its entire length.

3. A pipe bend according to claim 1 or 2, wherein the cross section of the divergent part of the inlet passage (10) diverges substantially concentrically about the axis (14) of the divergent part as a centre towards the downstream side in the conveying direction (12).

4. A pipe bend according to claim 1, 2 or 3 wherein the angle ($\theta_1$) of divergence of the divergent part of the inlet passage (10) is $0° < \theta_1 = 50°$.

5. A pipe bend according to claim 4, wherein the angle ($\theta_1$) of divergence of the divergent part is $10° < \theta_1 \leqq 30°$.

6. A pipe band according to any preceding claim, wherein the outlet section (8) defines an outlet passage (24) having a substantially circular cross-sectional shape, and the outlet passage (24) has a convergent part whose cross-sectional area progressively decreases towards the downstream side in the conveying direction (12) of the powder.

7. A pipe bend according to claim 6, wherein the cross section of the convergent part of the outlet passage (24)

-14-

converges substantially concentrically about the axis (26) of the convergent part as a centre towards the downstream side in the conveying direction (12).

8. A pipe bend according to claim 6 or 7, wherein the divergent part of the inlet passage (10) and the convergent part of the outlet passage (24) are symmetrical with respect to the curved flow passage (36).

9. A pipe bend as claimed in claim 6,7 or 8, wherein the conveying direction of the powder in the outlet passage (20) is substantially perpendicular to the conveying direction in the inlet passage (10).

● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ● ●

Fig. 2

Fig. 1

0195528

European Patent Office

**EUROPEAN SEARCH REPORT**

0195528

Application number

| | DOCUMENTS CONSIDERED TO BE RELEVANT | | EP 86301242.3 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | AT - B - 6 883 (PAUL RICHTER) <br> * Totality * | 1,3,6, 7,8 | F 16 L 43/00 <br> B 65 G 53/52 |
| Y | GB - A - 886 331 (FRANZ JOSEF SELL- MEIER) <br> * Totality * | 1,3,6 | |
| Y | DE - C - 168 922 (ALEXANDERWERK) <br> * Totality * | 1,3,6 | |
| A | * Totality * | 2 | |
| X | DE - B - 1 123 256 (DIPL.-ING. FRANZ JOSEF SELLMEIER) <br> * Totality * | 1-3,6 | |
| A | GB - A - 731 646 (MIAG) <br> * Totality * | 1 | TECHNICAL FIELDS SEARCHED (Int. Cl.4) <br><br> F 16 L 43/00 <br> B 65 G 53/00 |
| A | DE - B - 1 111 567 (REUSS BERGBAU U. INDUSTRIEBEDARF G.M.B.H.) <br> * Totality * | 1 | |

The present search report has been drawn up for all claims

| Place of search <br> VIENNA | Date of completion of the search <br> 10-06-1986 | Examiner <br> SCHUGANICH |
|---|---|---|